(19) Europäisches Patentamt
European Patent Office
Office européen des brevets

(11) **EP 4 579 696 A1**

(12) **EUROPEAN PATENT APPLICATION**
published in accordance with Art. 153(4) EPC

(43) Date of publication:
**02.07.2025 Bulletin 2025/27**

(21) Application number: 23857344.8

(22) Date of filing: **22.08.2023**

(51) International Patent Classification (IPC):
*H01F 10/16* [(2006.01)]    *H01F 1/00* [(2006.01)]
*H01F 41/16* [(2006.01)]

(52) Cooperative Patent Classification (CPC):
**H01F 10/16; H01F 1/00; H01F 41/16**

(86) International application number:
**PCT/JP2023/030166**

(87) International publication number:
**WO 2024/043235 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.08.2022 JP 2022131957**

(71) Applicants:
• **CITIZEN FINEDEVICE CO., LTD.
Minamitsuru-gun, Yamanashi 401-0395 (JP)**

• **Citizen Watch Co., Ltd.
Nishitokyo-shi, Tokyo 188-8511 (JP)**

(72) Inventors:
• **MIYAMOTO, Mitsunori
Minamitsuru-gun, Yamanashi 401-0395 (JP)**
• **KUBO, Toshiya
Minamitsuru-gun, Yamanashi 401-0395 (JP)**

(74) Representative: **Wallinger Ricker Schlotter
Tostmann
Patent- und Rechtsanwälte Partnerschaft mbB
Zweibrückenstraße 5-7
80331 München (DE)**

(54) **ISOTROPIC GRANULAR THIN FILM**

(57)     An isotropic granular thin film having a high sensitivity to an external magnetic field when linearly polarized light enters from the normal direction of a magnetic thin film is provided. An isotropic granular thin film 1 in which ferromagnetic nanoparticles 3 are dispersed in a dielectric matrix 2, wherein the ferromagnetic nanoparticle 3 consists of Co, an average particle diameter of the ferromagnetic nanoparticle 3 is not less than 5.0 nm and not more than 17.0 nm, a particle volume density of the ferromagnetic nanoparticle 3 is not less than 1 vol% and not more than 20 vol%, and magnetic dipole interaction energy of the ferromagnetic nanoparticle 3 is less than or equal to 2.0E-26 J.

Fig. 2

EP 4 579 696 A1

**Description**

FIELD

The present invention relates to an isotropic granular thin film.

BACKGROUND

A translucent magnetic thin film is known, which exhibits a magneto-optic effect, also referred to as the Faraday effect, in which the plane of polarization rotates when linearly polarized light parallel to the magnetic field is transmitted (for example, see Japanese Patent No. 6619216 (hereinafter referred to as Patent Literature 1) and Japanese Unexamined Patent Publication (Kokai) No. 2022-85978 (hereinafter referred to as Patent Literature 2). The magnetic thin film described in Patent Literature 1 and 2 includes fluoride matrixes and ferromagnetic nanoparticles having nano/micron size also referred to as metal granules. In the magnetic thin film described in Patent Literature 1 and 2, the fluoride matrix includes at least one or more elements selected from Li, Be, Mg, Al, Si, Ca, Sr, Ba, Bi, and rare-earth elements and fluorine. Further, the ferromagnetic nanoparticle includes one or more element selected from Fe, Co, and Ni.

The Faraday rotation angle of the magnetic thin film described in Patent Literature 1 and 2 is 0.1 [$°/\mu$m] or more in the near-infrared wavelength range and the Faraday rotation angle thereof is larger than that of yttrium garnet and bismuth-substituted garnet used conventionally as the magnetic thin film. The near-infrared wavelength range is a band used for optical communication and optical measurement, and the magnetic properties of various devices are improved by mounting the magnetic thin film described in Patent Literature 1 and 2 on the optical communication device and the optical measurement device.

SUMMARY

However, in the magnetic thin film described in Patent Literature 1 and 2, the magnetic interaction due to the size of the ferromagnetic nanoparticle and the adjacent distance between the ferromagnetic nanoparticles is large, and therefore the in-plane direction becomes an axis which is easily magnetized, and the normal direction becomes an axis which is difficult to magnetize, and in-plane magnetic anisotropy occurs. In the magnetic thin film described in Patent Literature 1 and 2, in-plane magnetic anisotropy occurs, and thus when linearly polarized light enters from the normal direction of the magnetic thin film, the Faraday effect does not occur easily, with the result that sensitivity to the external magnetic field may be low.

The present invention solves such a problem, and an object thereof is to provide an isotropic granular thin film having a high sensitivity to an external magnetic field when linearly polarized light enters from the normal direction of a magnetic thin film.

In an isotropic granular thin film according to the present disclosure, ferromagnetic nanoparticles are dispersed in a dielectric matrix, wherein the ferromagnetic nanoparticle consists of Co, an average particle diameter of the ferromagnetic nanoparticle is not less than 5.0 nm and not more than 17.0 nm, a particle volume density of the ferromagnetic nanoparticle is not less than 1 vol% and not more than 20 vol%, and magnetic dipole interaction energy of the ferromagnetic nanoparticle is less than or equal to 2.0E-26 J.

Further, in the isotropic granular thin film according to the present disclosure, it is preferable for the dielectric matrix to consists of $MgF_2$.

Also, in the isotropic granular thin film according to the present disclosure, it is preferable for the magnetic dipole interaction energy of the ferromagnetic nanoparticle to be larger than or equal to 4.6E-28 J.

Furthermore, in the isotropic granular thin film according to the present disclosure, it is preferable for a difference between a magnetic field reaching saturation magnetization when a magnetic field is applied in an in-plane direction and a magnetic field reaching saturation magnetization when a magnetic field is applied in a normal direction to be less than or equal to 1 kOe.

Still further, in the isotropic granular thin film according to the present disclosure, it is preferable for a Faraday rotation angle per unit length of linearly polarized light entering from a normal direction to be larger than or equal to 0.05 $°/\mu$m.

The isotropic granular thin film according to the present invention may increase the sensitivity to an external magnetic field.

BRIEF DESCRIPTION OF DRAWINGS

FIG. 1 is a perspective diagram of the isotropic granular thin film according to the embodiment;

FIG. 2 is a diagram showing a TEM image of the isotropic granular thin film according to the embodiment;

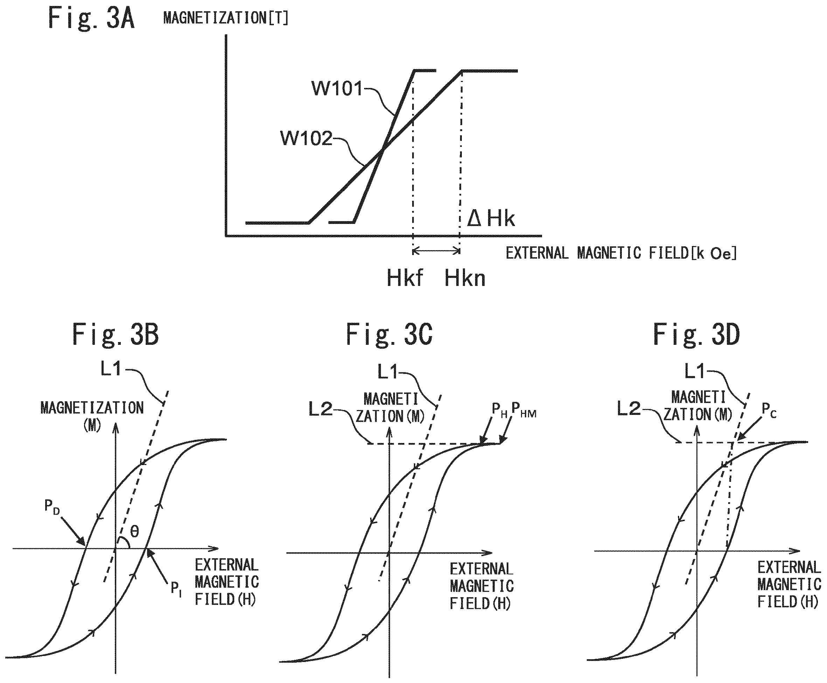

FIG. 3A is a diagram showing the difference $\Delta Hk$ between the anisotropic magnetic field Hkf in the in-plane direction of the isotropic granular thin film according to the embodiment and the anisotropic magnetic field Hkn in the normal direction of the isotropic granular thin film, FIG. 3B is a diagram showing a second process of the determination method of the anisotropic magnetic field Hk, FIG. 3C is a diagram showing a third process of the determination method of the anisotropic magnetic field Hk, and FIG. 3D is a diagram showing a fourth process of the determination method of the anisotropic magnetic field Hk;

FIG. 4 is a diagram showing one example of a TEM image used for calculating the average particle diameter of the ferromagnetic nanoparticle shown in FIG. 2;

FIG. 5 is a diagram showing variables used for the calculation of the magnetic dipole interaction energy;

FIG. 6 is a diagram showing a magnetization curve of Embodiment 6;

FIG. 7 is a diagram showing a magnetization curve in Comparative Example 2; and

FIG. 8 is a diagram showing a relationship among the average particle diameter, the magnetic dipole interaction energy, and the volume density of the ferromagnetic nanoparticle in each of Embodiments 1 to 10 and Comparative Examples 1 to 3.

DESCRIPTION OF EMBODIMENTS

In the following, a preferred embodiment according to the preset invention is explained by using the drawings. The present invention is not limited to the following embodiments and it is possible to appropriately change the embodiment in the scope not deviating from its gist. Further, in each drawing, to the component having the same or corresponding function, the same symbol is attached and there is a case where explanation thereof is omitted or simplified.

(Outline of isotropic granular thin film according to embodiment)

The inventors of the present application invention and etc., have found that an isotropic granular thin film having magnetic isotropy is formed by suppressing the appearance of the in-plane magnetic anisotropy by increasing the distance between ferromagnetic nanoparticles and isolating the ferromagnetic nanoparticle magnetically. The isotropic granular thin film according to the embodiment may suppress the appearance of the in-plane magnetic anisotropy and have magnetic isotropy by controlling the average particle diameter, the particle volume density, and the magnetic dipole interaction energy of the ferromagnetic nanoparticle in a predetermined range. In the isotropic granular thin film according to the embodiment, the average particle diameter of the ferromagnetic nanoparticle is 5.0 [nm] or more and the particle volume density of the ferromagnetic nanoparticle is not less than 1 [vol%] and not more than 20 [vol%]. Further, the magnetic dipole interaction energy of the ferromagnetic nanoparticle is 2.0E-26 [J] or less. The isotropic granular thin film according to the embodiment may increase the sensitivity to an external magnetic field when linearly polarized light enters from the normal direction of the magnetic field thin film by controlling the average particle diameter, the particle volume density, and the magnetic dipole interaction energy of the ferromagnetic nanoparticle in a predetermined range.

(Configuration of isotropic granular thin film according to embodiment)

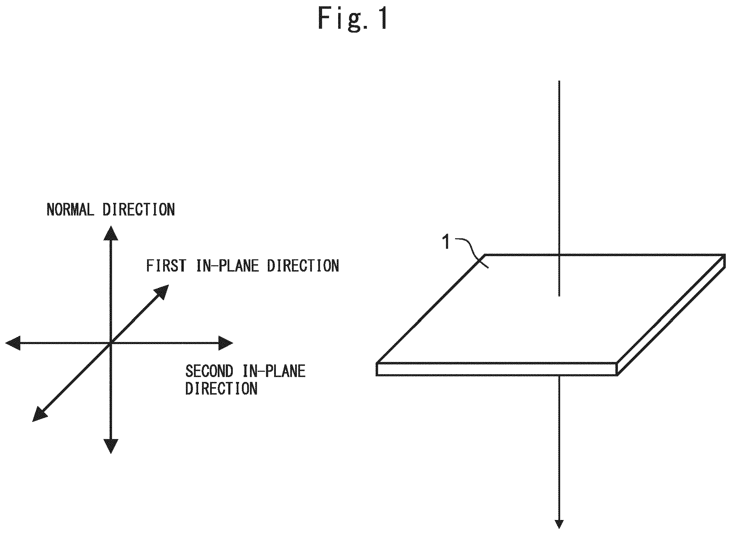

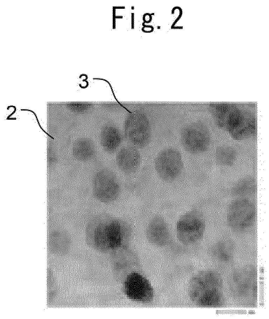

FIG. 1 is a perspective diagram of the isotropic granular thin film according to the embodiment, and FIG. 2 is a diagram showing a transmission electron microscope (TEM) image of the isotropic granular thin film according to the embodiment.

An isotropic granular thin film 1 is a granular film having a dielectric matrix 2 and ferromagnetic nanoparticles 3 dispersed in the dielectric matrix 2 in a state in which the ferromagnetic nanoparticles 3 are phase-separated stably from the dielectric matrix 2.

It is preferable for the material of the dielectric matrix 2 to be a fluoride (metal fluoride), such as magnesium fluoride ($MgF_2$), aluminum fluoride ($AlF_3$), and yttrium fluoride ($YF_3$). Further, the material of the dielectric matrix 2 may be an oxide, such as tantalum oxide ($Ta_2O_5$), silicon dioxide ($SiO_2$), titanium dioxide ($TiO_2$), diniobium pentoxide ($Nb_2O_5$), zirconium dioxide ($ZrO_2$), hafnium dioxide ($HfO_2$), and aluminum trioxide ($Al_2O_3$). For the favorable phase separation between the dielectric matrix 2 and the ferromagnetic nanoparticle 3, the fluoride is preferable to the oxide and magnesium fluoride whose transmittance is high is particularly preferable. The transmittance of the isotropic granular thin film 1 becomes high and the reduction in the amount of incident light is suppressed, by using the magnesium fluoride whose transmittance is high as the material of the dielectric matrix 2, and therefore the optical properties of the isotropic granular thin film 1 improve.

The material of the ferromagnetic nanoparticle 3 may be any material which produces the Faraday effect and is not limited particularly, and iron (Fe), cobalt (Co), and nickel (Ni), which are ferromagnetic metals, and an alloy of these metals is used as the material of the ferromagnetic nanoparticle 3. The alloy of Fe, Co, and Ni, for example, are an FeNi alloy, FeCo alloy, FeNiCo alloy, and NiCo alloy.

It is preferable for the surface of the ferromagnetic nanoparticle 3 to be fluorinated. When the surface of the ferromagnetic nanoparticle 3 is fluorinated, the fluorine elements more than or equal to the stoichiometric ratio of the fluoride may be arranged around the ferromagnetic nanoparticles 3.

It is preferable for the average particle diameter of the ferromagnetic nanoparticle 3 to be not less than 5 [nm] and not more than 17 [nm]. When the average particle diameter of the ferromagnetic nanoparticle 3 is less than 5 [nm], the magnetic properties of the ferromagnetic nanoparticle 3 become superparamagnetism, no longer ferromagnetism. Further, when the average particle diameter of the ferromagnetic nanoparticle 3 is larger than 17 [nm], the magnetic dipole interaction energy becomes larger than 2.0E-26 [J] and the magnetic properties of the isotropic granular thin film 1 are no longer isotropic. Thus, it is preferable for the average particle diameter of the ferromagnetic nanoparticle 3 to be not less than 5 [nm] and not more than 17 [nm]. Although the average particle diameter of the ferromagnetic nanoparticle 3 is not less than 5 [nm] and not more than 17 [nm], it is particularly preferable for the average particle diameter of the ferromagnetic nanoparticle 3 to be not less than 6 [nm] and not more than 11 [nm]. When the average particle diameter of the ferromagnetic nanoparticle 3 is not less than 6 [nm] and not more than 11 [nm], the isotropy of the magnetic properties of the isotropic granular thin film 1 appear easily.

When a difference $\Delta Hk$ between an anisotropic magnetic field Hkf in the in-plane direction of the isotropic granular thin film 1 including a first in-plane direction and a second in-plane direction and an anisotropic magnetic field Hkn in the normal direction of the isotropic granular thin film 1 is less than or equal to 1 [kOe], it is considered that the isotropic granular thin film 1 has magnetic isotropy. When the isotropic granular thin film 1 has the magnetic isotropy, the isotropic granular thin film 1 may have a high sensitivity to an external magnetic field due to linearly polarized light entering from the normal direction. An anisotropic magnetic field Hk is a magnetic field that reaches saturation magnetization when a magnetic field is applied in the in-plane direction or the normal direction of the isotropic granular thin film 1.

When the Faraday rotation angle per unit length of linearly polarized light entering from the normal direction is 0.05 [°/$\mu$m] or more, it is not necessary to increase the thickness of the isotropic granular thin film 1 excessively and a high Faraday effect is obtained for an external magnetic field. The isotropic granular thin film 1 has a high Faraday effect for an external magnetic field entering from the normal direction, and therefore the isotropic granular thin film 1 has a high sensitivity to linearly polarized light entering from the normal direction.

(Manufacturing method of isotropic granular thin film 1)

The isotropic granular thin film 1 is formed on a substrate heated to 450 [°C] in the degree of vacuum less than or equal to 5.0E-4 [Pa] by taking the raw material of each of the dielectric matrix 2 and the ferromagnetic nanoparticle 3 as a target in vapor deposition equipment or RF sputtering equipment.

The volume density of the ferromagnetic nanoparticle 3 is controlled by adjusting the content of the material of the dielectric matrix 2 and the ferromagnetic nanoparticle 3. The average particle diameter and the magnetic dipole interaction energy of the ferromagnetic nanoparticle 3 in the isotropic granular thin film 1 are controlled by adjusting the film formation rate of each of the dielectric matrix 2 and the ferromagnetic nanoparticle 3.

(Measurement method of difference $\Delta Hk$ in anisotropic magnetic field Hk)

FIG. 3A is a diagram showing the difference $\Delta Hk$ between the anisotropic magnetic field Hkf in the in-plane direction of the isotropic granular thin film 1 and the anisotropic magnetic field Hkn in the normal direction of the isotropic granular thin film 1. FIG. 3B is a diagram showing a second process of the determination method of the anisotropic magnetic field Hk, FIG. 3C is a diagram showing a third process of the determination method of the anisotropic magnetic field Hk, and FIG. 3D is a diagram showing a fourth process of the determination method of the anisotropic magnetic field Hk. In FIGs. 3A to 3D, the horizontal axis represents the external magnetic field [kOe] and the vertical axis represents magnetization [T]. Further, in FIG. 3A, a waveform W101 indicates the magnetization in the in-plane direction and a waveform W102 indicates the magnetization in the normal direction.

The anisotropic magnetic field Hkf in the in-plane direction of the isotropic granular thin film 1 is the magnetic field when the magnetization saturates by increasing the external magnetic field applied in the in-plane direction. On the other hand, the anisotropic magnetic field Hkn in the normal direction of the isotropic granular thin film 1 is the magnetic field when the magnetization saturates in by increasing the external magnetic field applied in the normal direction. The difference $\Delta Hk$ between the anisotropic magnetic field Hkf in the in-plane direction and the anisotropic magnetic field Hkn in the normal direction is the absolute value of the value obtained by subtracting the anisotropic magnetic field Hkf in the in-plane direction from the anisotropic magnetic field Hkn in the normal direction.

In a first process of the measurement method of the anisotropic magnetic field Hk, by using a VSM (Vibration Sample Magnetometer), the magnetization is measured by applying a magnetic field in the normal direction of the isotropic granular thin film 1 and a magnetization curve used for the measurement of the anisotropic magnetic field Hkn is obtained.

Next, as shown in FIG. 3B, in the second process, a straight line L1 passing through the origin of the magnetization curve and parallel to the tangential direction of the magnetization curve when the magnetization is zero is added onto the magnetization curve found in the fist process. A slope $\theta$ of the straight line L1 to be added in the second process is calculated as the average value of the slope of the tangent line at a point $P_I$ at which the magnetization of the magnetization curve is zero when the external magnetic field is increased in the first process and the slope of the tangent line at a point $P_D$ at which the magnetization of the magnetization curve is zero when the external magnetic field is decreased.

Next, as shown in FIG. 3C, in the third process, an extending straight line L2 is added in parallel to the saturation magnetization when the magnetization is positive. The straight line L2 to be added in the second process is drawn by extending the straight line connecting a point $P_H$ at which the hysteresis on the positive side of the magnetization curve closes and a point $P_{HM}$ indicating the magnetization corresponding to the maximum value of the external magnetic field.

Next, as shown in FIG. 3D, in the fourth process, the value of the external magnetic field corresponding to an intersection point $P_c$ of the straight line L1 to be added in the second process and the straight line L2 to be added in the third process is taken as the anisotropic magnetic field Hkn in the normal direction.

Next, in a fifth process, by using the VSM (Vibration Sample Magnetometer) and etc., magnetization is measured by applying a magnetic field in the in-plane direction of the isotropic granular thin film 1 and a magnetization curve used for measurement of the anisotropic magnetic field Hkf is obtained. Next, in a sixth process, the straight line L1 passing through the origin of the magnetization curve and parallel to the tangential direction of the magnetization curve when the magnetization is zero is added onto the magnetization curve found in the fifth process. Next, in a seventh process, the extending straight line 2 is added in parallel to the saturation magnetization when the magnetization is positive. Next, in an eighth process, the value of the external magnetic field corresponding to the intersection point $P_c$ of the straight line L1 to be added in the sixth process and the straight line L2 to be added in the seventh process is taken as the anisotropic magnetic field Hkf in the in-plane direction. The sixth process to the eighth process are the same as the second process to the fourth process, and therefore detailed explanation is omitted.

Then, in a ninth process, the absolute value of the value obtained by subtracting the anisotropic magnetic field Hkf in the in-plane direction obtained in the eighth process from the anisotropic magnetic field Hkn in the normal direction obtained in the fourth process is found as the difference $\Delta Hk$ between the anisotropic magnetic field Hkf in the in-plane direction and the anisotropic magnetic field Hkn in the normal direction.

(Measurement method of Faraday rotation angle)

The Faraday rotation angle is measured by a publicly known measurement method, such as the orthogonal polarizer method, the rotating analyzer method, the vibratory polarizer method, and the Faraday modulator method.

(Measurement method of average particle diameter of ferromagnetic nanoparticle 3)

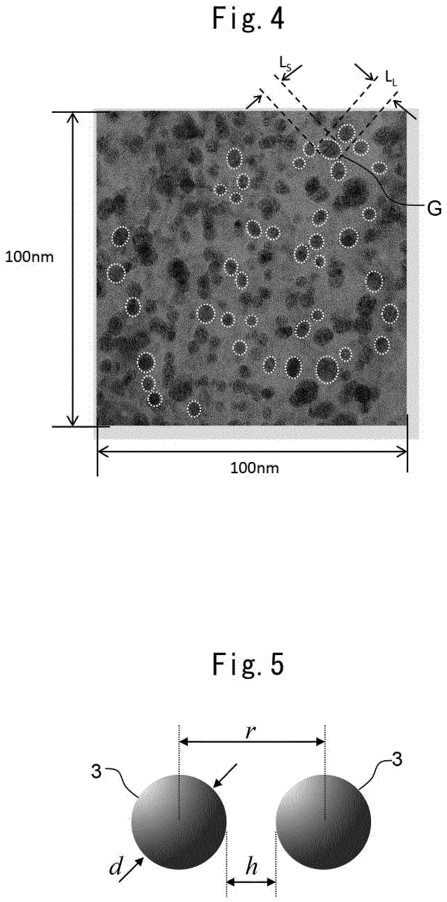

FIG. 4 is a diagram showing one example of a TEM image used for calculating the average particle diameter of the ferromagnetic nanoparticle 3.

The average particle diameter [nm] of the ferromagnetic nanoparticle 3 is calculated as the average value of the particle diameters of the ferromagnetic nanoparticles 3 included in the TEM image obtained by capturing an arbitrary area of the surface of the isotropic granular thin film 1. First, in an image capturing process, the TEM image of an arbitrary area of the surface of the isotropic granular thin film 1 is captured. The image capturing area of the TEM image captured in the image capturing process is a rectangular area of 100 [nm] $\times$ 100 [nm].

Next, in a particle diameter extraction process, the particle diameter of the ferromagnetic nanoparticle 3 included in the TEM image is extracted. In the particle diameter extraction process, the particle diameter of the ferromagnetic nanoparticle 3 is extracted as the average value of the length in the long-side direction of the ferromagnetic nanoparticle 3 and the length in the short-side direction of the ferromagnetic nanoparticle 3. For example, the length in the long-side direction of a particle G is $L_L$ and the length in the short-side direction is $L_S$, and therefore, it is possible to find the particle diameter of the particle G as $(L_L + L_S)/2$.

In the particle diameter extraction process, from among the ferromagnetic nanoparticles 3 included in the TEM image captured in the image capturing process, the particle diameters of at least the 20 ferromagnetic nanoparticles 3 are extracted, whose contour is clear and which is not captured in an overlapping manner with another ferromagnetic nanoparticle 3. Then, in an average particle diameter calculation process, the average value of the particle diameters of the ferromagnetic nanoparticles 3 extracted in the particle diameter extraction process is an average particle diameter d of the ferromagnetic nanoparticle 3. In FIG. 4, the periphery of all the particles utilized for calculating the average particle diameter d is indicated by a dotted line.

(Calculation method of magnetic dipole interaction energy of ferromagnetic nanoparticle)

The magnetic dipole interaction energy of the ferromagnetic nanoparticle 3 is calculated based on the volume of the ferromagnetic nanoparticle 3 calculated from the average particle diameter of the ferromagnetic nanoparticle 3 and a center-to-center distance of the ferromagnetic nanoparticles 3.

FIG. 5 is a diagram showing variables used for the calculation of the magnetic dipole interaction energy of the ferromagnetic nanoparticle 3. In FIG. 5, a symbol "d" indicates the average particle diameter of the ferromagnetic nanoparticle 3, a symbol "h" indicates a surface-to-surface distance of the ferromagnetic nanoparticles 3, and a symbol "r" indicates the center-to-center distance of the ferromagnetic nanoparticles 3.

First, in a volume density calculation process, the volume density of the ferromagnetic nanoparticle 3 in the isotropic granular thin film 1 is calculated. In the volume density calculation process, by the element analysis using the energy dispersive X-ray spectroscopy (EDX) method, the composition ratio of the isotropic granular thin film 1 is measured. Next, the volume density of the ferromagnetic nanoparticle 3 in the isotropic granular thin film 1 is calculated from the measured composition ratio of the isotropic granular thin film 1 and the density of the element contained in the isotropic granular thin film 1. The logical density is used as the density of Co and $MgF_2$ contained in the isotropic granular thin film 1.

Next, in a surface-to-surface distance calculation process, the surface-to-surface distance h [nm] is calculated from the average particle diameter d of the ferromagnetic nanoparticle 3 in the isotropic granular thin film 1, which is found by using FIG. 4, and a voltage density F [vol%] of the ferromagnetic nanoparticle 3 in the isotropic granular thin film 1, which is calculated in the volume density calculation process, by using formula (1).

[Mathematical formula 1]

$$h = d \left( \sqrt{\frac{1}{3\pi F} + \frac{5}{6}} - 1 \right) \qquad (1)$$

Next, in a magnetic dipole interaction energy calculation process, magnetic dipole interaction energy $E_{P-P}$ [J] is calculated by using formula (2). In formula (2), $M_s$ [Wb/m$^2$] is the saturation magnetization value, V [nm$^3$] is the volume of the ferromagnetic nanoparticle 3 calculated from the average particle diameter of the ferromagnetic nanoparticle 3, $\mu_0$ is the permeability in a vacuum, and r [nm] is the center-to-center distance of the ferromagnetic nanoparticles 3. The center-to-center distance is the sum of the average particle diameter d [nm] of the ferromagnetic nanoparticle 3 and the surface-to-surface distance h [nm] calculated in the surface-to-surface distance calculation process.

[Mathematic formula 2]

$$E_{p-p} = \frac{-M_s{}^2 V^2}{2\pi\mu_0 r^3} \qquad (2)$$

(Evaluation of isotropic granular thin film)

The isotropy and the Faraday effect when the volume density, the average particle diameter, and the magnetic dipole interaction energy of the ferromagnetic nanoparticle 3 are changed are evaluated by manufacturing a plurality of isotropic granular thin films using Co as the main component of the ferromagnetic nanoparticle 3 and $MgF_2$ as the main component of the dielectric matrix 2. The isotropic granular thin film 1 is formed on a substrate heated to 450 [°C] at the degree of vacuum less than or equal to 5.0E-4 [Pa] by taking Co and $MgF_2$ as a target.

In the isotropic granular thin film to be manufactured, the content of Co and $MgF_2$ is adjusted so that the volume density of the ferromagnetic nanoparticle is 0.5 [Vol%], 1 [Vol%], 3 [Vol%], 5 [Vol%], 10 [Vol%], and 20 [Vol%]. For the plurality of manufactured isotropic granular thin films, the average particle diameter d (nm) is measured based on "Measurement method of average particle diameter of ferromagnetic nanoparticle 3" and the surface-to-surface distance h (nm) is calculated by utilizing formula (1) described previously. Further, the magnetic dipole interaction energy $E_{p-p}$ is calculated by utilizing the measured average particle diameter d (nm), the calculated surface-to-surface distance h (nm), and formula (2) described previously.

Table 1 is a table describing the main component of the ferromagnetic nanoparticle, the main component of the dielectric matrix, and the voltage density [Vol%], the average particle diameter [nm], and the magnetic dipole interaction energy [J] of the ferromagnetic nanoparticle for 13 kinds of manufactured isotropic granular thin film.

In Table 1, the difference ΔHk between the anisotropic magnetic field Hkf in the in-plane direction and the anisotropic magnetic field Hkn in the normal direction is measured as the indicator of "Isotropy" in accordance with "Measurement method of difference ΔHk in anisotropic magnetic field Hk" described previously for the 13 kinds of manufactured isotropic granular thin films. As described previously, in a case where the difference ΔHk between the anisotropic magnetic field Hkf in the in-plane direction and the anisotropic magnetic field Hkn in the normal direction is less than or equal to 1 [kOe], it is considered that there is magnetic isotropy, and therefore, in a case where the measured value is less than or equal to [kOe], "○" is input and in the other case, "×" is input. Further, in Table 1, for the 13 kinds of manufactured isotropic granular thin films, the Faraday rotation angle is measured as the indicator of "Faraday effect" in accordance with "Measurement method of Faraday rotation angle" described previously. As described previously, in a case where the Faraday rotation angle is larger than or equal to 0.05 [°/μm], it is considered that the desired Faraday effect is obtained, and therefore, in a case where the measured Faraday rotation angle is larger than or equal to 0.05 [°/μm], "○" is input and in the other case, "×" is input.

In Table 1, the isotropic granular thin films for which "○" is input to both "Isotropy" and "Faraday effect" are taken to be Embodiments 1 to 10 and the isotropic granular thin films in the other case are taken to be Comparative Examples 1 to 3.

[Table 1]

Table 1

| | Ferromagnetic nanoparticle | Dielectric matrix | Particle volume density | Average particle diameter | Magnetic dipole interaction energy | Isotropy | Faraday effect |
|---|---|---|---|---|---|---|---|
| Embodiment 1 | Co | $MgF_2$ | 1 | 5 | 4.6E-28 | ○ | ○ |
| Embodiment 2 | Co | $MgF_2$ | 1 | 17 | 1.8E-26 | ○ | ○ |
| Embodiment 3 | Co | $MgF_2$ | 3 | 5 | 1.9E-27 | ○ | ○ |
| Embodiment 4 | Co | $MgF_2$ | 3 | 10 | 1.6E-26 | ○ | ○ |
| Embodiment 5 | Co | $MgF_2$ | 5 | 5 | 3.5E-27 | ○ | ○ |
| Embodiment 6 | Co | $MgF_2$ | 5 | 9 | 2.0E-26 | ○ | ○ |
| Embodiment 7 | Co | $MgF_2$ | 10 | 5 | 6.8E-27 | ○ | ○ |
| Embodiment 8 | Co | $MgF_2$ | 10 | 7 | 1. 9E-26 | ○ | ○ |
| Embodiment 9 | Co | $MgF_2$ | 20 | 5 | 1.1E-26 | ○ | ○ |
| Embodiment 10 | Co | $MgF_2$ | 20 | 6 | 1. 9E-26 | ○ | ○ |
| Comparative Example 11 | Co | $MgF_2$ | 3 | 4 | 99E-28 | ○ | × |
| Comparative Example 12 | Co | $MgF_2$ | 5 | 13 | 6.1E-26 | × | ○ |
| Comparative Example 13 | Co | $MgF_2$ | 0.5 | 10 | 1.4E-27 | ○ | × |

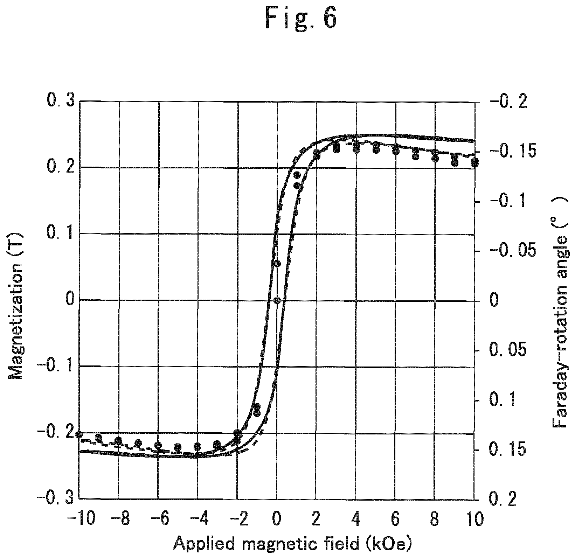

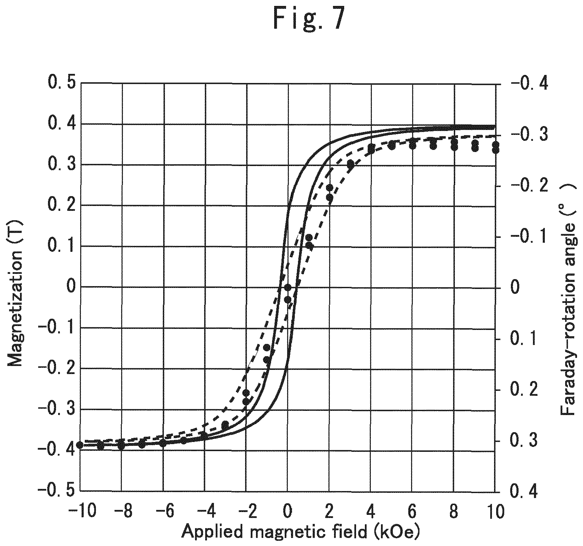

FIG. 6 is a diagram showing a magnetization curve of Embodiment 6 and FIG. 7 is a diagram showing a magnetization curve in Comparative Example 2. In FIG. 6 and FIG. 7, the horizontal axis represents the external magnetic field [kOe], the left vertical axis represents magnetization [T], and the right vertical axis represents a Faraday rotation angle $\theta_F$. Further, in FIG. 6 and FIG. 7, a solid line indicates a magnetization curve when the external magnetic field is applied in the normal direction, a broken line indicates a magnetization curve when the external magnetic field is applied in the in-plane direction, and a circle indicates the Faraday rotation angle $\theta_F$.

In Embodiment 6, the difference $\Delta$Hk between the anisotropic magnetic field Hkf in the in-plane direction and the anisotropic magnetic field Hkn in the normal direction is 0.1 [kOe] and the Faraday rotation angle is 0.12 [°/$\mu$m]. Further, in Comparative Example 2, the difference $\Delta$Hk between the anisotropic magnetic field Hkf in the in-plane direction and the anisotropic magnetic field Hkn in the normal direction is 1.6 [kOe] and the Faraday rotation angle is 0.23 [°/$\mu$m].

In FIG. 6, the magnetization curve in the in-plane direction and the magnetization curve in the normal direction substantially match with each other and the difference $\Delta$Hk between the anisotropic magnetic fields is sufficiently small, and therefore, it is known that the there is no anisotropy in the magnetization direction but there is isotropy in the magnetization direction. On the other hand, in FIG. 7, compared to the slope of the magnetization curve in the in-plane direction, the slope of the magnetization curve in the normal direction is small and the difference $\Delta$Hk between the anisotropic magnetic fields is large, and therefore it is known that there is anisotropy that makes magnetization likely to face in the in-plane direction. In a case where the Faraday effect of a thin film is utilized, usually it is general that incidence is in the normal direction, and therefore, in a case where there is isotropy as in FIG. 6, the sensitivity to the external magnetic field becomes high.

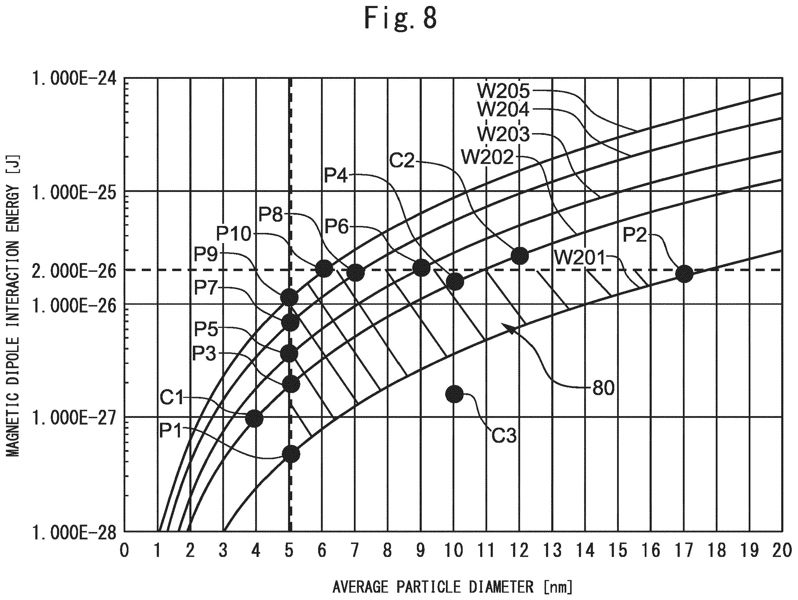

FIG. 8 is a diagram showing a relationship among the average particle diameter, the magnetic dipole interaction energy, and the volume density of the ferromagnetic nanoparticle 3 in each of Embodiments 1 to 10 and Comparative Examples 1 to 3. In FIG. 8, the horizontal axis represents the average particle diameter [nm] of the ferromagnetic nanoparticle 3 and the vertical axis represents the magnetic dipole interaction energy [J] of the ferromagnetic nanoparticle 3. In FIG. 8, points P to P10 correspond to Embodiments 1 to 10 and points C1 to C3 correspond to Comparative Examples 1 to 3.

Further, five curves shown in FIG. 8 are each a curve connecting Embodiments having the same volume density. A curve W201 corresponds to the volume density of 1 [vol%], a curve W202 corresponds to the volume density of 3 [vol%], a curve W203 corresponds to the volume density of 5 [vol%], a curve W204 corresponds to the volume density of 10 [vol%], and a curve W205 corresponds to the volume density of 20 [vol%],

From FIG. 8, it can be understood that in the isotropic granular thin films (Embodiments 1 to 10) matching an area 80 indicated by slashes, the average particle diameter of the ferromagnetic nanoparticle is not less than 5.0 [nm] and not more than 17.0 [nm], the particle volume density of the ferromagnetic nanoparticle is not less than 1 [vol%] and not more than 20 [vol%], and the magnetic dipole interaction energy of the ferromagnetic nanoparticle is less than or equal to 2.0E-26 [J], and therefore, those isotropic granular thin films have the predetermined isotropy and the Faraday effect.

On the other hand, the isotropic granular thin films (Comparative Examples 1 to 3) outside the area 80 in FIG. 8 do not have the predetermined isotropy or the Faraday effect. In Comparative Example 1, the average particle diameter of the ferromagnetic nanoparticle 3 is 4 [nm], which is smaller than 5 [nm], and therefore, the magnetic properties of the ferromagnetic nanoparticle 3 become superparamagnetic, no longer ferromagnetic. In Comparative Example 2, the magnetic dipole interaction energy is 6.1E-26 [J], which is higher than 2.0E-26 [J], and therefore, $\Delta$Hk is larger than 1 [kOe] and it is not possible to obtain sufficient isotropy. In Comparative Example 3, the average particle diameter of the ferromagnetic nanoparticle 3 is 10 [nm], which is larger than that in Embodiment 1, but the volume density is 0.5 [vol%], which is smaller than 1 [vol%], which is the volume density in Embodiments 1 and 2, and therefore, the Faraday rotation angle becomes smaller than 0.05 [°/$\mu$m] and it is not possible to obtain the sufficient Faraday effect.

As shown in the above description, it can be said that the isotropic granular thin film in a case where the average particle diameter of the ferromagnetic nanoparticle is not less than 5.0 [nm] and not more than 17.0 [nm], the particle volume density of the ferromagnetic nanoparticle is not less than 1 [vol%] and not more than 20 [vol%], the magnetic dipole interaction energy of the ferromagnetic nanoparticle is less than or equal to 2.0E-26 [J], and the like can be utilized as an isotropic granular thin film whose sensitivity to an external magnetic field is high when linearly polarized light is caused to enter from the normal direction of the magnetic thin film.

## Claims

1.    An isotropic granular thin film in which ferromagnetic nanoparticles are dispersed in a dielectric matrix, wherein

the ferromagnetic nanoparticle consists of Co,
an average particle diameter of the ferromagnetic nanoparticle is not less than 5.0 nm and not more than 17.0 nm,
a particle volume density of the ferromagnetic nanoparticle is not less than 1 vol% and not more than 20 vol%, and

magnetic dipole interaction energy of the ferromagnetic nanoparticle is less than or equal to 2.0E-26 J.

2. The isotropic granular thin film according to claim 1, wherein
the dielectric matrix consists of $MgF_2$.

3. The isotropic granular thin film according to claim 2, wherein
the magnetic dipole interaction energy of the ferromagnetic nanoparticle is larger than or equal to 4.6E-28 J.

4. The isotropic granular thin film according to any one of claims 1 to 3, wherein
a difference between a magnetic field reaching saturation magnetization when a magnetic field is applied in an in-plane direction and a magnetic field reaching saturation magnetization when a magnetic field is applied in a normal direction is less than or equal to 1 kOe.

5. The isotropic granular thin film according to any one of claims 1 to 3, wherein
a Faraday rotation angle per unit length of linearly polarized light entering from a normal direction is larger than or equal to 0.05 °/um.

Fig.1

NORMAL DIRECTION

FIRST IN-PLANE DIRECTION

SECOND IN-PLANE
DIRECTION

1

Fig. 2

# Fig. 3A

MAGNETIZATION[T]

W101

W102

ΔHk

Hkf  Hkn

EXTERNAL MAGNETIC FIELD[k Oe]

# Fig. 3B

MAGNETIZATION (M)

L1

$P_D$

θ

$P_I$

EXTERNAL MAGNETIC FIELD (H)

# Fig. 3C

L1

L2

MAGNETIZATION (M)

$P_H$ $P_{HM}$

EXTERNAL MAGNETIC FIELD (H)

# Fig. 3D

L1

L2

MAGNETIZATION (M)

$P_C$

EXTERNAL MAGNETIC FIELD (H)

EP 4 579 696 A1

# Fig. 4

# Fig. 5

# Fig. 6

# Fig. 7

Fig. 8

EP 4 579 696 A1

## INTERNATIONAL SEARCH REPORT

| International application No. |
| --- |
| **PCT/JP2023/030166** |

### A. CLASSIFICATION OF SUBJECT MATTER

*H01F 10/16*(2006.01)i; *H01F 1/00*(2006.01)i; *H01F 41/16*(2006.01)i
FI:   H01F10/16; H01F1/00 163; H01F41/16

According to International Patent Classification (IPC) or to both national classification and IPC

### B. FIELDS SEARCHED

Minimum documentation searched (classification system followed by classification symbols)

H01F10/16; H01F41/16; H01F1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-27222 A (RES INSTITUTE FOR ELECTROMAGNETIC MATERIALS) 22 February 2021 (2021-02-22) | 1-5 |
| A | JP 2022-57406 A (CITIZEN FINEDEVICE CO LTD) 11 April 2022 (2022-04-11) | 1-5 |
| P, A | WO 2023/021877 A1 (RES INSTITUTE FOR ELECTROMAGNETIC MATERIALS) 23 February 2023 (2023-02-23) | 1-5 |
| E, A | JP 2023-124672 A (TDK CORPORATION) 06 September 2023 (2023-09-06) | 1-5 |

☐ Further documents are listed in the continuation of Box C.    ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **12 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030166**

| Patent document cited in search report | | | Publication date (day/month/year) | Patent family member(s) | Publication date (day/month/year) |
|---|---|---|---|---|---|
| JP | 2021-27222 | A | 22 February 2021 | (Family: none) | |
| JP | 2022-57406 | A | 11 April 2022 | (Family: none) | |
| WO | 2023/021877 | A1 | 23 February 2023 | DE     112022000092     T | |
| JP | 2023-124672 | A | 06 September 2023 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6619216 B

- JP 2022085978 A